Europäisches Patentamt

European Patent Office

Office européen des brevets

(19)

(11) Numéro de publication: **0 082 749**
**B1**

(12) **FASCICULE DE BREVET EUROPEEN**

(45) Date de publication du fascicule du brevet:
02.05.85

(21) Numéro de dépôt: **82402235.4**

(22) Date de dépôt: **07.12.82**

(51) Int. Cl.⁴: **H 04 M 11/06**

(54) **Terminal télématique raccordé à deux lignes téléphoniques et à téléalimentation partielle.**

(30) Priorité: **18.12.81 FR 8123726**

(43) Date de publication de la demande:
**29.06.83 Bulletin 83/26**

(45) Mention de la délivrance du brevet:
**02.05.85 Bulletin 85/18**

(84) Etats contractants désignés:
**DE GB IT SE**

(56) Documents cités:
**EP - A - 0 019 250
FR - A - 2 452 842
FR - A - 2 472 319**

**JAPAN TELECOMMUNICATIONS REVIEW, vol. 22, no. 3,
juillet 1980, pages 201-209, Tokyo (JP); MASAAKI TERAI
et al.: "Data telephone set"
THE BELL SYSTEM TECHNICAL JOURNAL, vol. 57, no.
10, décembre 1978, pages 3487-3502, New York (USA);
BAKER et al.: "Transaction stations"**

(73) Titulaire: **THOMSON-CSF TELEPHONE, 146, Boulevard
de Valmy, F-92707 Colombes (FR)**

(72) Inventeur: **Baudoin, Michel, THOMSON-CSF
SCPI 173 Bld. Haussmann, F-75379 Paris Cedex 08 (FR)**
Inventeur: **Carru, Jean-Pierre, THOMSON-CSF
SCPI 173 Bld. Haussmann, F-75379 Paris Cedex 08 (FR)**
Inventeur: **Veislinger, Yves, THOMSON-CSF
SCPI 173 Bld. Haussmann, F-75379 Paris Cedex 08 (FR)**

(74) Mandataire: **Weinmiller, Jürgen et al, Zeppelinstrasse 63,
D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un terminal télématique raccordé à deux lignes téléphoniques et à téléalimentation partielle.

Les terminaux télématiques actuellement utilisés n'offrent pas toutes les possibilités qu'on pourrait en attendre, et ne permettent pas en particulier d'utiliser les mêmes circuits de traitement centralisé pour de la téléphonie classique et pour de la transmission de données et affichage de ces données.

La présente invention a pour objet un terminal télématique pouvant traiter aussi bien de la téléphonie que des données quelconques, ce terminal comportant le moins de composants possible. La présente invention a également pour objet un terminal télématique pouvant être raccordé à deux lignes téléphoniques différentes dont l'une est téléalimentée, en cas de panne de secteur, ce qui permet d'assurer les services téléphoniques de base en toute situation.

Le terminal conforme à l'invention est normalement alimenté en énergie par un secteur d'alimentation, peut être relié à deux lignes téléphoniques, et comporte un dispositif de visualisation de données commandé par une unité centrale de traitement coopérant avec un clavier d'introduction de données et reliée, d'une part, par un modem à la première des deux lignes téléphoniques précitées et, d'autre part, à un circuit de génération de signaux d'appels téléphoniques coopérant avec un clavier de numérotation et relié à la seconde ligne téléphonique par un circuit de transmission téléphonique électronique, le courant de la seconde ligne téléphonique étant susceptible d'alimenter le circuit de transmission téléphonique, le circuit de génération de signaux d'appel, et un circuit de détection d'appels à vibreur.

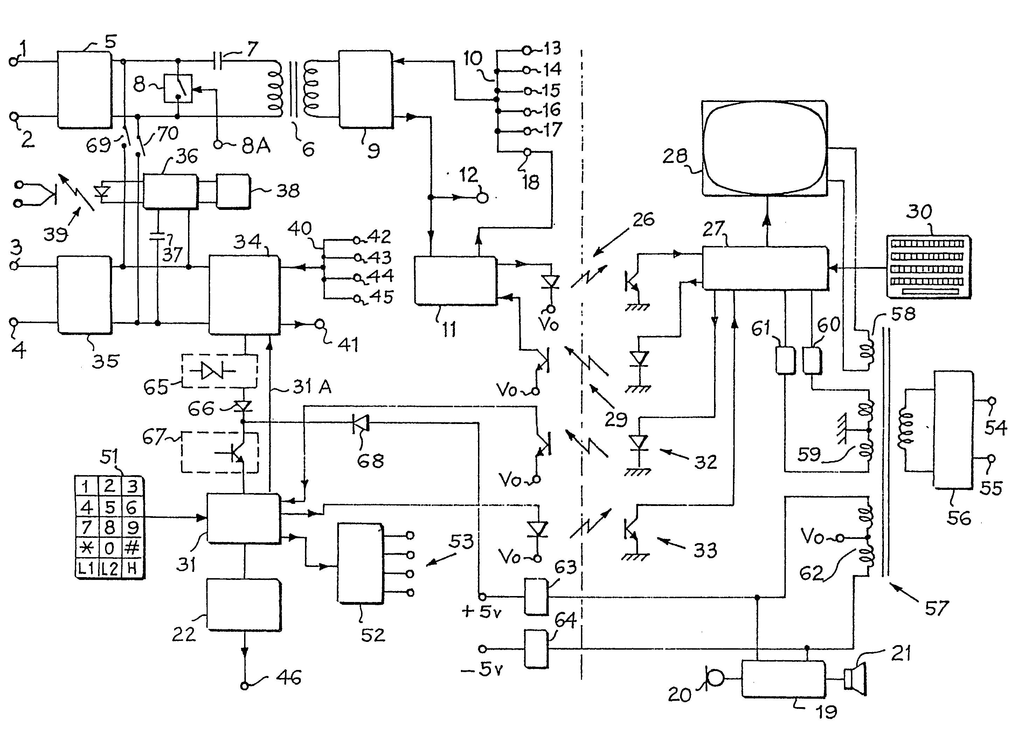

La présente invention sera mieux comprise à la lecture de la description détaillée d'un mode de réalisation de l'invention pris comme exemple non limitatif et illustré par le dessin annexé dont la figure unique est un bloc diagramme de ce mode de réalisation.

Le terminal télématique représenté sur la figure unique du dessin est relié à deux lignes téléphoniques différentes (non représentées) branchées sur les bornes 1, 2, et 3, 4 respectivement. Les bornes 1 et 2 sont reliées à un dispositif 5 antisurtension connu en soi et comportant par exemple des varistances et des diodes Zener. La sortie du dispositif 5 est reliée à un transformateur 6 d'isolation galvanique par l'intermédiaire d'un condensateur 7 de blocage de composante continue. La sortie du dispositif 5 est également reliée à un relais de boucle 8 dont l'entrée de commande est reliée à une borne 8A, elle-même reliée, de façon non représentée, au circuit de traitement décrit ci-dessous. Le transformateur 6 est relié, d'autre part, à un circuit de séparation 2 fils-4 fils 9 dont l'entrée de signaux, du côté 4 fils, est reliée au contact commun d'un commutateur-sélecteur analogique 10. La sortie de signaux, du côté 4 fils, du dispositif 9 est reliée à l'entrée d'un modem 11 (modulateur-démodulateur). Les différents contacts individuels 13 à 18 du commutateur 10 sont respectivement reliés, de façon non représentée, à la sortie de signaux de microphone d'un circuit 19 d'écoute amplifiée et de mains libres dont le microphone est référencé 20 et dont le haut-parleur est référencé 21, à la sortie du microphone d'un combiné téléphonique classique (non représenté), à la sortie de signaux de numérotation multifréquence d'un circuit générateur multifréquence 22, à une sortie de l'unité de traitement décrite ci-dessous à signal de contrôle se présentant comme un court-circuit en basse fréquence, et à la sortie du modem 11. Pour ne pas surcharger le dessin, seule la liaison entre la sortie du modem 11 et le contact 18 a été représentée. La sortie est respectivement reliée, de façon non représentée, à l'écouteur du combiné *via* un contacteur également non représenté, à l'entrée d'écoute amplifiée du circuit 19, et à l'entrée de signaux de la partie mains libres du circuit 19.

La sortie de signaux démodulés du modem 11 est reliée, par l'intermédiaire d'un dispositif photocoupleur 26, à une entrée correspondante d'un circuit centralisé de traitement 27, par exemple le circuit intégré microprocesseur 6809. Le circuit 27 est relié à un dispositif à écran de visualisation 28. La sortie de signaux de données à moduler du circuit 27 et reliée par l'intermédiaire d'un photocoupleur 29 à l'entrée de signaux à moduler du modem 11. Le circuit 27 est également relié à un clavier classique d'introduction de données 30. Une sortie de données du circuit 27 est reliée à une entrée de données d'un circuit 31 de traitement d'appels téléphoniques par l'intermédiaire d'un photocoupleur 32. Le circuit 31 assure l'exécution de la numérotation, les commutations des différents signaux à émettre en ligne, et les commandes qui permettent de converser sur une ligne ou l'autre en mains libres ou non. Une entrée de données du circuit 27 est reliée à une sortie de données du circuit 31 par l'intermédiaire d'un photocoupleur 33. Le circuit 31, qui coopère également avec le générateur multifréquence 22, peut être un simple circuit intégré spécifique, par exemple le circuit TMS 1200C.

La sortie de signaux de numérotation décimale du circuit 31 est reliée par une liaison 31A à une entrée d'injection de signaux de numérotation décimale d'un circuit de transmission téléphonique électronique 34 réalisé, par exemple, à partir d'un circuit intégré spécifique tel que le circuit intégré ITT 1045M. Le côté 2 fils du circuit 34 est relié aux bornes 3 et 4 par l'intermédiaire d'un circuit de protection 35 présentant un degré de protection plus élevé que le circuit 5, le circuit 35 comportant, par exemple, en plus des diodes Zener et des varistances, des dispositifs parafoudre. La sortie du circuit 35 est également reliée à un détecteur de sonnerie 36 par l'intermédiaire d'un condensateur 37 d'arrêt de composante continue. Le détecteur de sonnerie 36 est relié, d'une part, à un vibreur 38 qui ne fonctionne qu'en cas de panne du secteur alimentant le terminal. Le détecteur de sonnerie 36 est également relié à la diode photoémissive d'un photocoupleur 39 dont le phototransistor est relié, de façon non représentée, à un dispositif de sonnerie, ce dispositif de sonnerie pouvant être un générateur de tonalités musicales à plusieurs tons commandé par le circuit 31 et inclus dans le circuit d'écoute amplifiée 19.

Du côté 4 fils du circuit 34, l'entrée de signaux basse fréquence et reliée à un commutateur-sélecteur 40. Les différents contacts individuels 42 à 45 du commutateur 40 sont respectivement reliés, de façon non représentée, à la sortie 46 du générateur 22, au microphone du combiné et au microphone 20. La sortie 41 du côté 4 fils du circuit 34 est respectivement reliée à l'écouteur du combiné, au circuit d'écoute amplifiée et au circuit mains libres du circuit 19.

Le circuit de traitement 31 coopère avec un clavier de numérotation 51 comportant les dix touches habituelles d'un clavier de numérotation et plusieurs touches de fonctions qui comprennent en particulier une touche L1 et une touche L2 pour la connexion du terminal sur la première ligne ou la seconde ligne (aboutissant respectivement aux bornes 1, 2 et 3, 4), et une touche hold de maintien. Le circuit 31 coopère également avec une interface 52 réalisée par exemple avec des circuits MC 40174 dont les différentes sorties, généralement référencées 53, commandent, de façon non représentée, les commutateurs 10 et 40 ainsi que différents relais, par exemple le relais de connexion de la première ligne téléphonique, le relais d'aiguillage du combiné sur la première ou la seconde ligne téléphonique, etc. Le secteur d'alimentation du terminal arrive sur les bornes 54 et 55 auxquelles est relié un circuit d'alimentation 56, de préférence un circuit d'alimentation à découpage. Le circuit 56 et relié à l'enroulement primaire d'un transformateur 57 d'isolation galvanique dont un premier enroulement secondaire haute tension 58 alimente l'écran de visualisation 28. Un second enroulement secondaire 59 du transformateur 57 alimente, à travers des régulateurs de tension 60 et 61, le circuit 27 en tensions symétriques, par exemple +5 et −5 V, le point milieu de l'enroulement 59 étant relié à la masse du terminal. Le transformateur 57 comporte un troisième enroulement secondaire 62 dont le point milieu est relié à un potentiel flottant Vo, cet enroulement étant relié à deux régulateurs de tension 63, 64 alimentant en tensions réglées et symétriques par rapport à Vo, par exemple +5 et −5 V, les circuits téléphoniques du terminal. On notera que, dans les photocoupleurs 26, 29, 32 et 33, les éléments, photodiode ou phototransistor, dont une électrode est reliée au circuit 27, sont d'autre part reliés à la masse, tandis que les éléments dont une électrode est reliée au circuit téléphonique sont reliés d'autre part au potentiel flottant Vo.

On prélève une partie de l'énergie fournie par le courant de ligne au circuit de transmission 34, et on l'envoie par l'intermédiaire d'un circuit 65 de stabilisation de courant, d'une diode 66 montée dans le sens passant, et d'un circuit 67 de régulation de tension, au circuit 31. D'autre part, on relie la sortie du circuit régulateur 63 par une diode 68, montée dans le sens passant, à l'entrée du circuit de régulation 67. Le circuit 65 est déterminé de façon à fournir à sa sortie une tension légèrement inférieure à celle fournie par le circuit de régulation 63. Dans un exemple de réalisation, la tension de sortie du circuit 65 est de 4 V, alors que la tension fournie par le circuit 63 est de 5 V. Ainsi, tant que la tension secteur alimentant les bornes 54 et 55 est présente, la diode 66 est bloquée, et le circuit 31 est alimenté par le secteur via le circuit 63 et la diode 68. Dès que la tension secteur fait défaut, la diode 66 devient passante, et une partie du courant de ligne sert à alimenter le circuit 31 dont la tension nominale d'alimentation doit être inférieure à la tension fournie par le circuit 65. Dans l'exemple de réalisation précitée, la tension d'alimentation du circuit 31 est typiquement de 4 V.

Dans le cas du mode de réalisation décrit ci-dessus, et en présence de la tension secteur, les appels provenant de l'extérieur ne peuvent être acheminés que par la ligne téléphonique reliée aux bornes 3 et 4, alors que les appels vers l'extérieur peuvent être acheminés par l'une ou l'autre des deux lignes téléphoniques auxquelles est raccordé le terminal. Les appels extérieurs acheminés par la ligne connectée aux bornes 3 et 4 sont traitées par le détecteur de sonnerie 36 qui transmet au circuit 31 l'ordre de sonnerie via le photocoupleur 39 tant que le secteur d'alimentation est présent, le vibreur 38 étant inhibé. Dès qu'il se produit une panne de ce secteur d'alimentation, le vibreur 38 n'est plus inhibé, et l'utilisateur du terminal peut répondre à un appel incident en utilisant le combiné. On notera que le secteur d'alimentation alimente, outre les circuits 27 et 28, les fonctions écoute amplifiée, mains libres, sonnerie, la fonction de numérotation de la ligne reliée aux bornes 1 et 2 et, le cas échéant, la fonction bell du clavier 30.

Lorsque l'utilisateur du terminal veut appeler sur l'une des deux lignes téléphoniques à sa disposition, et que le secteur d'alimentation est présent, il sélectionne sur le clavier 51 l'une des deux lignes, et compose sur ce clavier son numéro qui est pris en compte par le circuit 31 pour être transformé en impulsions décimales ou en signaux multifréquences suivant le cas. Si la tension d'alimentation par secteur vient à disparaître, le circuit 31 transmet directement l'information correspondante au circuit 34 qui l'achemine sur cette ligne. Lorsque la tension d'alimentation par le secteur est présente, le circuit 31 transmet d'abord l'information issue du clavier 51 via le photocoupleur 33 au circuit 27 qui la mémorise. Puis le circuit 27 transmet l'ordre correspondant via le photocoupleur 32 au circuit 31. Si par exemple la ligne de l'abonné demandé est occupée, le circuit 27 se charge d'effectuer la relance automatique via le photocoupleur 32.

Les données autres que les conversations téléphoniques passent par le circuit 27 et le modem 11 et transitent par la ligne reliée aux bornes 1 et 2. Cet échange de données sur ligne téléphonique étant bien connu en soi ne sera pas expliqué en détail.

Les sorties des circuits 5 et 35 sont reliées en parallèle par l'intermédiaire de deux contacts 69, 70 d'un commutateur, par exemple manuel, ces contacts étant normalement ouverts. Si l'on ne dispose que d'une seule ligne téléphonique, on ferme ces contacts et on branche la ligne sur les bornes 3 et 4. Dans le cas où la tension secteur est présente, les circuits reliés à la ligne arrivant sur les bornes 1 et 2 sont utilisés pour la transmission de données et la parole. L'autre ligne, arrivant sur les bornes 3 et 4, est normalement isolée par les contacts d'un relais de prise de ligne (non représentée). Lorsqu'il y a un défaut de secteur d'alimentation, seule la transmission de la parole est assurée de façon automatique par les circuits reliés aux bornes 3 et 4.

## Revendications

1. Terminal télématique raccordé à deux lignes téléphoniques et normalement alimenté en énergie par un secteur d'alimentation, et comportant un dispositif (28) de visualisation de données commandé par une unité centrale de traitement (27) coopérant avec un clavier d'introduction de données (30), caractérisé par le fait que l'unité centrale de traitement (27) est reliée, d'une part, par un modem (11) à la première des deux lignes téléphoniques précitées (1, 2) et, d'autre part, à un circuit (31) de génération de signaux d'appels téléphoniques coopérant avec un générateur multifréquence (22) et avec un clavier (51) de numérotation et relié à la seconde ligne téléphonique (3, 4) par un circuit de transmission téléphonique électronique (34), le courant de la seconde ligne téléphonique (3, 4) étant susceptible d'alimenter le circuit de transmission téléphonique (34), le circuit de génération de signaux d'appels (31) et un circuit de détection d'appels (36) à vibreur (38).

2. Terminal selon la revendication 1, dans lequel le circuit de génération de signaux d'appels (31) téléphoniques coopère avec un dispositif sélecteur (51) de ligne téléphonique, ce circuit de génération étant relié, d'une part (31A et 42), via le circuit générateur multifréquence (22), au circuit de transmission téléphonique (34) et, d'autre part (33), à l'unité centrale de traitement, caractérisé par le fait que, lorsque la tension secteur est présente, les signaux d'appels téléphoniques sont traités par l'unité centrale de traitement (27) via le circuit de génération de signaux d'appels (31), et que, lorsque la tension secteur est absente, les signaux d'appels téléphoniques sont envoyés au seul circuit de transmission téléphonique (34).

3. Terminal selon l'une des revendications précédentes, caractérisé par le fait que les circuits d'alimentation en énergie (62, 63, 64, 68) du circuit de génération de signaux d'appels téléphoniques à partir du secteur sont galvaniquement séparés des circuits d'alimentation en énergie (58 à 61) des autres circuits du terminal, et par le fait que la transmission d'informations entre le circuit de génération de signaux d'appels (31) téléphoniques et l'unité centrale de traitement (27), ainsi qu'entre l'unité centrale de traitement (27) et la ligne téléphonique, s'effectue par l'intermédiaire de photocoupleurs (32, 33 et 26, 29).

## Patentansprüche

1. Ferngesteuerter Terminal, der an zwei Fernsprechleitungen angeschlossen und normalerweise von einem Speisenetz mit Energie gespeist ist, und der ferner eine durch eine mit einer Dateneingabetastatur (30) zusammenwirkende Verarbeitungszentraleinheit (27) gesteuerte Datendarstellungsvorrichtung (28) aufweist, dadurch gekennzeichnet, dass die Verarbeitungszentraleinheit (27) einerseits über einen Modulator-Demodulator (11) an die erste der beiden vorgenannten Fernsprechleitungen (1, 2) und andererseits an einen Fernsprechrufsignalerzeugungskreis (31) angeschlossen ist, der mit einem Vielfachfrequenzerzeuger (22) und einer Numeriertastatur (51) zusammenwirkt und über einen elektronischen Fernsprechübertragungskreis (34) mit der zweiten Fernsprechleitung (3, 4) verbunden ist, wobei der Strom der zweiten Fernsprechleitung (3, 4) dazu bestimmt ist, den Fernsprechübertragungskreis (34), den Rufsignalerzeugerkreis (31) und einen einen Vibrator (38) aufweisenden Rufauffindungskreis (36) zu speisen.

2. Terminal nach Anspruch 1, bei dem der Fernsprechrufsignalerzeugerkreis (31) mit einer Fernsprechleitungswählvorrichtung (51) zusammenwirkt, während dieser Erzeugerkreis (31A und 42) über den Vielfachfrequenzerzeuger (22) an den Fernsprechübertragungskreis (34) und andererseits (33) an die Zentralverarbeitungseinheit angeschlossen ist, dadurch gekennzeichnet, dass bei Vorliegen der Speisenetzentspannung die Fernsprechrufsignale über den Rufsignalerzeugerkreis durch die Zentralverarbeitungseinheit (27) verarbeitet werden, während bei Abwesenheit der Speisenetzspannung die Fernsprechrufsignale lediglich dem Fernsprechübertragungskreis (34) zugeleitet werden.

3. Terminal nach einem der vorstehenden Ansprüche, dadurch gekennzeichnet, dass die den Fernsprechrufsignalerzeugerkreis vom Speisenetz aus speisenden Energiespeisekreise (62, 63, 64, 68) von den die anderen Stromkreise des Terminals mit Energie speisenden Speisekreisen (58 bis 61) galvanisch getrennt sind, und dass die Übertragung von Informationen zwischen dem Fernsprechrufsignalerzeugerkreis (31) und der Zentralverarbeitungseinheit (27) sowie zwischen der Zentralverarbeitungseinheit (27) und der Fernsprechleitung über Fotokuppler (32, 33 und 26, 29) erfolgt.

## Claims

1. Telematic terminal connected to two telephone lines and normally fed with energy by a feeding network, and comprising a data visualization device (28) controlled by a central processing unit (27) cooperating with a data keyboard (30), characterized in that the central processing unit (27) is connected, on the one hand, through a modulator-demodulator (11), to the first one of said two telephone lines (1, 2) and, on the other hand, to a telephone call signal generating circuit cooperating with a multifrequency generator (22) and with a numbering keyboard (51) and connected to the second telephone line (3, 4) through an electronic telephone transmission circuit (34), the current of the second telephone line (3, 4) being adapted to feed the telephone transmission circuit (34), the call signal generating circuit (31) and call detection circuit (36) comprising a vibrator (38).

2. Terminal according to Claim 1, wherein the telephone call signal generating circuit (31) cooperates with a telephone line selecting device (51), said generator circuit being connected, on the one hand (31A and 42), through the multifrequency generator (22), to the telephone transmission circuit (34) and, on the other hand (33), to the central processing unit, characterized in that, in the presence of the network voltage, the telephone call signals are processed by the central processing unit (27) through the call signal generating circuit (31), and in the absence of the network voltage, the telephone signals are transmitted only to the telephone transmission circuit (34).

3. Terminal according to any one of the preceding claims, characterized in that the circuits (62, 63, 64, 68) for feeding network energy to the telephone call signal generating circuit are galvanically separated from the circuits (58 to 61) feeding energy to the other circuits of the terminal, and in that the transmission of information between the telephone call signal generating circuit (31) and the central processing unit (27), as well as between the central processing unit (27) and the telephone line is performed through the intermediary of photocouplers (32, 33 and 26, 29).